# EUROPÄISCHE PATENTANMELDUNG

(11) **EP 2 458 242 A2**
(43) Veröffentlichungstag der Anmeldung: **30.05.2012**
(21) Anmeldenummer: 11008946.3
(22) Anmeldetag: 10.11.2011
(51) Int. Cl.: F16F 1/26, G01D 11/24

(54) **Verbesserter Sensor-/Aktor-Korpus**

(30) Priorität: 10.11.2010 DE 102010050754
(71) Anmelder: Integrated Dynamics Engineering GmbH, 65479 Raunheim (DE)
(72) Erfinder: Tillmann, Ralf, 68309 Mannheim (DE)
(74) Vertreter: Herden, Andreas F.

(57) **Zusammenfassung**

Die vorliegende Erfindung betrifft ein Gehäuse zur Aufnahme eines Sensors zur Erfassung von Schwingungen und/oder zur Aufnahme eines Aktors zur Kompensation von Schwingungen und ein Verfahren zur Herstellung des Gehäuses. Das Gehäuse zur Aufnahme wenigstens eines Sensors mit einer Spule zur Erfassung von Schwingungen und/oder zur Aufnahme wenigstens eines Aktors mit einer Spule zur Kompensation von Schwingungen umfasst die folgenden Komponenten: ein Basisteil mit einem Bereich zur Aufnahme der Spule des Sensors und/oder zur Aufnahme der Spule des Aktors und/oder mit einem Kanal zur Fluidkühlung des Gehäuses, ein Gegenstück, das mit dem Basisteil derart verbunden ist, dass zumindest der Aufnahmebereich und/oder der Kanal und die in dem Aufnahmebereich positionierte Spule abgedeckt sind, wobei der Aufnahmebereich als eine erste Aussparung in dem Basiskörper ausgeführt ist und/oder der Kanal als eine zweite Aussparung in dem Basiskörper ausgeführt ist, die über ein Material auflösendes und/oder ein Material verdampfendes Verfahren in dem Basiskörper eingebracht ist bzw. sind und/oder wobei das Basisteil und das Gegenstück mittels eines Lots verbunden sind, welches ein auf Nickel basiertes Lot ist und einen Anteil an Chrom von größer als 10 Gew.% aufweist. Als Resultat ergibt sich eine Lötlegierung an den Grenzflächen mit einer geringen Magnetisierung. Durch ein Ätzen der Aussparungen kann zudem eine Magnetisierung verhindert oder reduziert werden.

## Beschreibung

### Beschreibung der Erfindung

Die vorliegende Erfindung betrifft ein Gehäuse zur Aufnahme eines Sensors zur Erfassung von Schwingungen und/oder zur Aufnahme eines Aktors zur Kompensation von Schwingungen und ein Verfahren zur Herstellung des Gehäuses.

### Hintergrund der Erfindung

Schwingungsisolationssysteme sind bekannt und werden in vielen Bereichen der Technik, wie zum Beispiel im Bereich der Halbleiterindustrie, benötigt. Beispielsweise zeigt die DE 69817750 T2 ein Schwingungsisolationssystem, welches insbesondere zur schwingungsisolierten Lagerung eines Lithographie-Geräts vorgesehen ist. Dort wird eine schwingungsisoliert zu lagernde Last, die typischerweise einen Tisch und auf dem Tisch gelagerte Bauelemente, wie zum Beispiel Fertigungsanlagen, umfasst, auf Luftlagern gelagert. Der Tisch wird auch als Basismasse bezeichnet. Ferner können auf der Basismasse verfahrbare oder beweglich angeordnete Tische, sogenannte Stages, insbesondere zum Transport von Wafern, verwendet werden.

Ein passives Schwingungsisolationssystem ist gekennzeichnet durch eine "einfache" Lagerung mit möglichst geringer mechanischer Steifigkeit, um die Übertragung von externen Schwingungen auf die zu isolierende Last zu reduzieren. Ein Luftlager und ein Polymer-Federelement zum Lagern sind zwei Beispiele für ein passives Schwingungsisolationssystem. Gegenüber einer passiven Schwingungsisolation, die.durch eine Art Dämpfung der Schwingung oder eine Art isolierte Lagerung der Last gekennzeichnet ist, ist eine aktive Schwingungsisolation dadurch gekennzeichnet, dass die Schwingung aktiv kompensiert wird. Eine Bewegung, welche durch eine Schwingung induziert wird, wird durch eine entsprechende Gegenkraft kompensiert. Zum Beispiel wird einer durch eine Schwingung induzierten Beschleunigung der Masse eine dem Betrag nach gleich große Beschleunigung, jedoch mit entgegengesetzten Vorzeichen entgegengesetzt. Die resultierende Gesamtbeschleunigung der Last ist gleich Null. Die Last verharrt in Ruhe bzw. der gewünschten Lage.

Aktive Schwingungsisolationssysteme weisen daher, optional zusammen mit einer Lagerung mit möglichst mechanisch geringer Steifigkeit, zusätzlich ein Regelsystem auf, das eine Regeleinrichtung sowie Sensoren und Aktoren umfasst, mit denen gezielt von außen in das System eindringenden Schwingungen entgegengewirkt wird. Die Sensoren erfassen Bewegungen der zu lagernden Last. Über die Regeleinrichtung werden Kompensationssignale generiert, mit welchen die Aktoren, welche auch als Kraftaktoren bezeichnet werden, angesteuert und so Kompensationsbewegungen generiert werden. Dabei gibt es die Möglichkeit, digitale oder analoge Regelungsstrecken zu verwenden oder aber auch beide zusammen, sogenannte hybride Regelungsstrecken.

Als Aktoren kommen vorzugsweise berührungslose Kraftaktoren zum Einsatz. Dadurch kann die Übertragung von Schwingungen auf eine zu isolierende Masse vermindert oder vermieden werden. Die berührungslosen Kraftaktoren bedienen sich der Tauchspulentechnik, in der eine stromdurchflossene Spule innerhalb eines vorzugsweise nichtlinearen Magnetfeldes eine Kraftwirkung entfaltet. Diese werden oft auch als Lorentzmotoren bezeichnet. Sie werden vorzugsweise in Schwingungsisolationssystemen eingesetzt und/oder bei den verfahrbaren Tischen (sogenannten Stages) und/oder bei anderen Maschinenteilen, die berührungslos bewegt werden müssen.

Auch bei Sensoren bedient man sich der Tauchspulentechnik, wobei dort die induzierte Spannung bei der Bewegung durch ein homogenes Magnetfeld als geschwindigkeitsproportionales Messsignal verwendet wird.

Die Spule, welche im Allgemeinen durch einen aufgewickelten Spulendraht bereitgestellt ist, wird in und/oder auf einen Träger aus Edelstahl, welcher auch als Tauchspulenkörper, Spulenkörper, Gehäuse oder Korpus bezeichnet ist, gebracht, damit dieser mechanisch am restlichen System angebracht werden kann. Dazu wird typischerweise eine Vertiefung in einen Edelstahlkörper oder -träger gefräst. Die Spule wird dort hineingebracht und anschließend verklebt und gegebenenfalls mit Kunststoff vergossen. Zur mechanischen Absicherung wird dann auf den quasi offenen Träger noch ein Blech als eine Art Deckel aufgebracht, beispielsweise ein weiteres Edelstahlteil, und damit verschlossen, beispielsweise mittels Kleben. Nach dem Einführen der Spule können die beiden Teile, hier der Träger und der Deckel, auch mittels eines Lötverfahrens miteinander verbunden.

Zur Fertigung solcher Tauchspulensysteme für Sensor- oder Aktoranwendungen werden typischerweise unmagnetische Stoffe verwendet, damit nicht schon der stromlose Tauchspulenkörper eine Kraftwirkung im Magnetfeld erfährt. Zum Einsatz kommen dabei, insbesondere auch wegen der SEMI-Normen für Reinraumanwendungen, typischerweise Edelstahl-Materialien. Zum Einsatz beim Löten kommt ein Lot des Typs BNi-2. Es ist eine Legierung, die auf Nickel, Chrom, Silizium, Bor und Eisen basiert. Sie verbindet sich unter Hitzezufuhr mit dem Metall (Lötverbindung). Durch die an den Grenzflächen entstehende Legierung ergibt sich jedoch wiederum eine Magnetisierung, die ebenfalls bei handelsüblichen Lorentzmotoren eine Kraftwirkung um die 6 N/mm verursachen kann.

Weiterhin sind Kühlmechanismen bekannt, bei denen der Tauchspulenkörper zusätzlich gefräste Kanäle innerhalb des Edelstahlkorpus' enthält, durch die Kühlwasser gepumpt werden kann, damit die durch die Ströme erzeugte Abwärme kontrolliert abgeführt werden kann. Das ist insbesondere für Reinraumbedingungen mit kontrollierten klimatischen Bedingungen extrem wichtig, um Messpräzisionen von modernen Maschinen gewährleisten zu können. Diese Kanäle werden typischerweise ebenfalls in den Korpus gefräst. Diese Fertigungsart hat jedoch mit dem Umstand zu kämpfen, dass beim Fräsen Magnetisierungseffekte auftreten, so dass typischerweise Leerlaufmagnetisierungen zu Kraftwirkungen von 6 Newton pro Millimeter auftreten. Besondere Verfahren zur Entmagnetisierung (typischerweise Erhitzungs-/Abkühlungsverfahren) können diese Effekte auf weniger als 0,6 N/mm drücken, stellen dennoch eine Beeinträchtigung des Tauchspulensystems dar, insbesondere durch die Verteuerung bei seiner Herstellung aufgrund des zusätzlichen Prozesses.

### Allgemeine Beschreibung der Erfindung

Vor diesem Hintergrund hat sich die vorliegende Erfindung zur Aufgabe gestellt, ein Gehäuse.zur Aufnahme eines Sensors zur Erfassung von Schwingungen und/oder zur Aufnahme eines Aktors zur Kompensation von Schwingungen und ein Verfahren zur Herstellung des Gehäuses bereitzustellen, welche die vorstehend beschriebenen Nachteile des Standes der Technik zumindest vermindern.

Dabei soll es insbesondere möglich sein, in der Herstellung des Gehäuses eine mögliche Magnetisierung des Komponenten des Gehäuses zu vermeiden und/oder ein Gehäuse mit einer möglichst geringen Magnetisierung bereitzustellen.

Gelöst werden die genannten Aufgaben durch ein Gehäuse und ein Herstellungsverfahren gemäß den beiden unabhängigen Ansprüchen.

Vorteilhafte Ausführungsformen sind Gegenstand der jeweiligen Unteransprüche.

Zunächst beansprucht die vorliegende Anmeldung ein Gehäuse zur Aufnahme wenigstens eines Sensors mit einer Spule zur Erfassung von Schwingungen und/oder zur Aufnahme wenigstens eines Aktors mit einer Spule zur Kompensation von Schwingungen umfassend
- ein Basisteil mit einem Bereich zur Aufnahme der Spule des Sensors und/oder zur Aufnahme der Spule des Aktors und/oder mit einem Kanal zur Fluidkühlung des Gehäuses,
- ein Gegenstück, das mit dem Basisteil derart verbunden ist, dass zumindest der Aufnahmebereich und/oder der Kanal und die in dem Aufnahmebereich positionierte Spule abgedeckt sind, wobei
der Aufnahmebereich als eine erste Aussparung in dem Basiskörper ausgeführt ist und/oder der Kanal als eine zweite Aussparung in dem Basiskörper ausgeführt ist, die über ein Material auflösendes und/oder ein Material verdampfendes Verfahren in dem Basiskörper eingebracht ist bzw. sind und/oder wobei
das Basisteil und das Gegenstück mittels eines Lots verbunden sind, welches vorzugsweise ein auf Nickel basiertes Lot ist und einen Anteil an Chrom von größer als 10 Gew.% aufweist.

Im Bereich der Erfindung liegt auch ein Verfahren zur Herstellung eines Gehäuse zur Aufnahme wenigstens eines Sensors mit einer Spule zur Erfassung von Schwingungen und/oder zur Aufnahme wenigstens eines Aktors mit einer Spule zur Kompensation von Schwingungen umfassend
- ein Basisteil mit einem Bereich zur Aufnahme der Spule des Sensors und/oder zur Aufnahme der Spule des Aktors und/oder mit einem Kanal zur Fluidkühlung des Gehäuses,
- ein Gegenstück, das mit dem Basisteil derart verbunden wird, dass zumindest der Aufnahmebereich und/oder der Kanal und die in dem Aufnahmebereich positionierte Spule abgedeckt werden, wobei
der Aufnahmebereich als eine erste Aussparung in dem Basiskörper ausgeführt wird und/oder der Kanal als eine zweite Aussparung in dem Basiskörper ausgeführt wird, die über ein Material auflösendes und/oder ein Material verdampfendes Verfahren in dem Basiskörper eingebracht wird bzw. werden und/oder wobei
das Basisteil und das Gegenstück mittels eines Lots, das vorzugsweise ein auf Nickel basiertes Lot.ist und einen Chromanteil von größer als 10 Gew.% aufweist, verbunden werden.

Das erfindungsgemäße Gehäuse ist vorzugsweise mit dem erfindungsgemäßen Verfahren hergestellt oder herstellbar.

Das Basisteil stellt eine Art Träger für die Spule oder ein Bestandteil eines Trägers für die Spule dar. Das Gegenstück kann zum Beispiel eine Art Deckel für das Basisteil sein. Es kann insbesondere als eine ebene Abdeckung für den Basisköper bereitgestellt werden, das selbst keine Strukturen oder Aussparungen aufweist. Die Strukturen oder Aussparungen werden dann im Wesentlichen nur durch den Basiskörper bereitgestellt.

In einer Ausführungsform entspricht jedoch das Gegenstück in seiner Geometrie und/oder seinen Abmessungen im Wesentlichen der Geometrie und/oder den Abmessungen des Basisteils. Vorzugsweise wird das Gehäuse durch zwei im Wesentlichen gleiche Bauteile gebildet, die miteinander verbunden sind.

Dazu wird der Aufnahmebereich für die Spule, insbesondere zusätzlich, als eine erste Aussparung in dem Gegenstück ausgeführt und/oder der Kanal, insbesondere zusätzlich, als eine zweite Aussparung in dem Gegenstück ausgeführt, die vorzugsweise ebenso über ein Material auflösendes und/oder ein Material verdampfendes Verfahren in dem Basiskörper eingebracht ist bzw. sind. In einer Ausführungsform wird der Aufnahmebereich für die Spule in dem gebildeten Gehäuse durch die erste Aussparung in dem Basiskörper und die erste Aussparung in dem Gegenstück gebildet. Als Alternative oder Ergänzung wird der Kanal zum Führen des Fluids oder zur Fluidkühlung durch die zweite Aussparung in dem Basiskörper und die zweite Aussparung in dem Gegenstück gebildet.

Vorzugsweise ist oder umfasst das Material auflösende Verfahren ein Ätzverfahren und/oder ist oder umfasst das Material verdampfende Verfahren eine Laserablation. Dadurch kann eine Magnetisierung bei der Herstellung der Strukturen bzw. beim Einbringen der Aussparungen wirksam vermieden oder reduziert werden. Ätzen ist im Hinblick auf die Kosten zudem sehr vorteilhaft.

Das auf Nickel basierte Lot ist ein Lot, das Nickel als den Hauptbestandteil enthält. Der Nickelanteil stellt gegenüber den restlichen Bestandteilen den größten Anteil dar. Dieser liegt vorzugsweise bei größer als 50 Gew.%. In einer bevorzugten Ausführungsform der Erfindung ist das Lot im Wesentlichen frei von Eisen. Vorzugsweise ist dabei das Lot im Wesentlichen aus den Bestandteilen Nickel, Chrom und Silizium aufgebaut ist. Das Lot besitzt einen Anteil an Silizium von 5 Gew.% bis 15 Gew.%, vorzugsweise von 8 Gew.% bis 12 Gew.%, und/oder einen Anteil an Chrom von 15 Gew.% bis 25 Gew%, vorzugsweise von 17 Gew.% bis 21 Gew.%, und/oder einen Anteil an Nickel von größer als 60 Gew.%, vorzugsweise von größer als 65 Gew.%. In einer bevorzugten Ausführungsform ist das Lot ein auf Nickel basiertes Lot vom Typ BNi-5 (gemäß DIN 8513:1986 AWS/AMS). Diese Lot hat sich als besonders vorteilhaft erwiesen, da im Wesentlichen keine Magnetisierung in der gebildeten und verbindenden Lotschicht auftritt oder diese gegenüber dem Material BNi-2 zumindest reduziert ist.

Das Lot wird flächig aufgebracht oder bereitgestellt auf oder zwischen dem Basiskörper und/oder dem Gegenstück. In einer Ausführungsform der Erfindung wird das Lot zum Verbinden als eine Lötfolie bereitgestellt. Vorzugsweise weist das aufgebracht Lot oder die Lötfolie, insbesondere entsprechend dem Basisteil und/oder dem Gegenstück, eine erste und/oder eine zweite Aussparung auf. Diese sind vorzugsweise mittels Stanzen in die Lötfolie eingebracht. Dadurch kann die Strukturierung der Lötfolie gut an die Strukturierung des Basiskörpers und/oder des Gegenstücks angepasst werden.

Im Rahmen der Erfindung liegt auch die Verwendung eines auf Nickel basierten Lots mit einem Chromanteil von größer als 10 Gew.%, vorzugsweise vom Typ BNi-5, zum Aufbau eines Gehäuse, welches zur Aufnahme wenigstens eines Sensors mit einer Spule zur Erfassung von Schwingungen und/oder zur Aufnahme wenigstens eines Aktors mit einer Spule zur Kompensation von Schwingungen ausgebildet ist.

Weiterhin liegt im Rahmen der Erfindung auch ein aktives Schwingungsisolationssystem umfassend
a) eine Basismasse zum Lagern einer zu isolierenden Last,
b) pneumatische Schwingungsisolatoren mit regelbaren Ventilen zum Stützen der Basismasse gegenüber einer Unterlage,
c) Positionssensoren zum Liefern von vertikalen Positionssignalen der Basismasse,
d) ein Regelsystem zur Schwingungskompensation in zumindest einem Freiheitsgrad der Translation (Xt,Yt,Zt) und zumindest einem Freiheitsgrad der Rotation (Xr,Yr,Zr)
mit wenigstens
d1) Sensoren zum Liefern von Schwingungen repräsentierenden Sensorsignalen,
d2) Aktoren zur Schwingungskompensation, die durch Zuführen von Aktor-Stellsignalen ansteuerbar sind, und
d3) einer Regeleinrichtung, welche zum Verarbeiten der gelieferten Sensorsignale in die Aktor-Stellsignale ausgebildet ist,
wobei wenigstens ein auf einer Tauchspulentechnik basierender Sensor aus den Sensoren und/oder wenigstens ein auf einer Tauchspulentechnik basierender Aktor aus den Aktoren in einem erfindungsgemäßen Gehäuse angeordnet ist bzw. sind.

Die vorliegende Erfindung wird anhand der nachfolgenden Ausführungsbeispiele im Einzelnen erläutert. Hierzu wird auf die beiliegenden Zeichnungen Bezug genommen. Die gleichen Bezugszeichen in den einzelnen Zeichnungen beziehen sich auf die gleichen Teile.
Fig. 1 zeigt schematisch ein beispielhaftes aktives Schwingungsisolationssystem.
Fig. 2 zeigt schematisch den Aufbau des Basisteils als ein Bestandteil eines Tauchspulenkörpers.
Fig. 3a und 3b zeigen schematisch den Tauchspulenkörper aus dem Basisteil und dem Gegenstück in einer Außenansicht und in einer Innenansicht.

### Detaillierte Beschreibung der Erfindung.

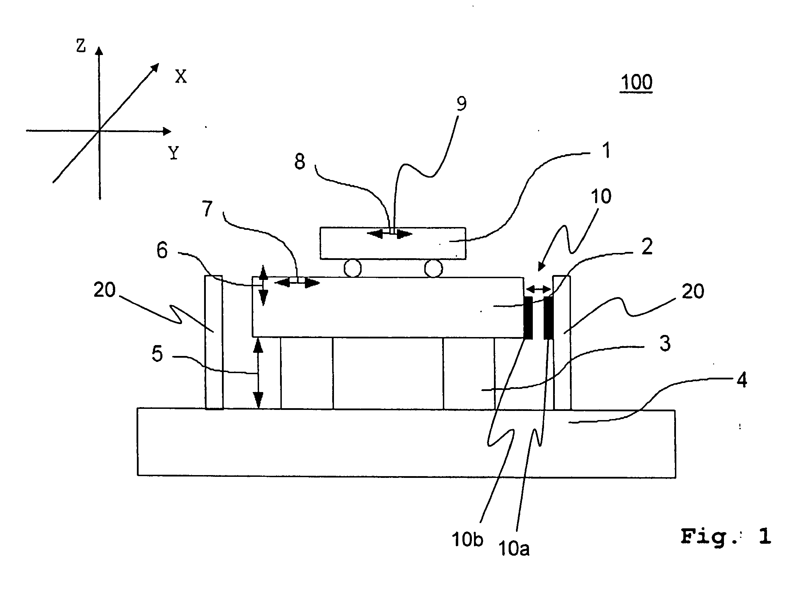

Figur 1 zeigt ein Schwingungsisolationssystem 100 auf Basis pneumatischer Isolatoren 3. Eine zu isolierende Masse 2 ist mittels pneumatischer Isolatoren 3 schwingungsisoliert oder isoliert von einem Boden 4 gelagert. Auf der Masse 2 selbst ist ein verfahrbarer Tisch 1, insbesondere zum Transport von Wafern, Lithographie-Geräten, Wafer-Handhabungssystemen und/oder Mikroskopen, angeordnet. Die horizontale Richtung oder Ebene wird durch die Achsen X und Y und die vertikale Richtung durch die Achse Z des in Figur 1 gezeigten Koordinatensystems illustriert. Die Achsen X und Z liegen in der Blattebene und die Achse Y senkrecht zur Blattebene.

Zur aktiven Schwingungsisolation umfasst das System 100 in einer Ausgestaltungsform vier pneumatische Isolatoren 3, eine Vielzahl von Aktoren 10 und eine Vielzahl von Sensoren 5, 6, 7, 8, und 9 als Schwingungssignalgeber. Über die Sensoren 6, 7, 8, und 9 können Schwingungen oder allgemein Bewegungen der Basismasse 2 und der zu isolierenden Last 1 erfasst, in Signale umgewandelt und an ein Regelsystem weitergegeben werden. Die Sensoren 5, 6, 7, 8, und 9 als Schwingungssignalgeber liefern somit die Schwingungen repräsentierende Sensorsignale.

Aus Gründen einer verbesserten Übersicht sind in der Figur nur ein Teil der Komponenten und die Sensoren nur für zwei Freiheitsgrade der Translation Yt und Zt dargestellt.

Die Sensoren sind beispielsweise Geschwindigkeitssensoren, Beschleunigungssensoren oder/und Positionssensoren. Als ein Beispiel sind in der Figur 1 ein Positionssensor 5 und ein Geschwindigkeits- und/oder Beschleunigungssensor in vertikaler Richtung 6 und in horizontaler Richtung 7 sowie an dem fahrbaren Tisch 1 ein Beschleunigungssensor 8 und ein Positionssensor 9 illustriert.

Die Aktoren sind vorzugsweise Aktoren mit horizontaler und/oder vertikaler Wirkrichtung. Dabei sind die Aktoren im Allgemeinen konventionelle Kraftaktoren. Beispiele für die Kraftaktoren oder Aktoren stellen Lorentzmotoren und/oder auch Piezoaktoren usw. dar. Die Aktoren sind im Allgemeinen in räumlicher Nähe zu den Sensoren positioniert. In einer Ausführungsform ist jedem Sensor ein Aktor zugeordnet.

Ergänzend ist in der Figur 1 noch ein berührungsloser Aktor 10 oder Kraftaktor 10 zur Schwingungskompensation mit einer beispielhaft gewählten horizontalen Wirkrichtung, hier entlang der Y-Achse, gezeigt.

Der Aktor 10 setzt sich hier aus zwei Komponenten zusammen: Einer ersten Komponente 10a, welche den erfindungsgemäßen Tauchspulenkörper 10a mit eingebrachter Spule 13 umfasst und einer zweiten Komponente 10b, welche Permanentmagneten umfasst, zur Wechselwirkung mit der ersten Komponente 10a. Die erste Komponente 10a ist hier beispielhaft an einer Art Rahmen 20 des Schwingungsisolationssystems 100 angebracht. Die zweite Komponente 10b ist hier an der zu isolierenden Masse 2 angebracht. Die erste und die zweite Komponente 10a und 10b können auch umgekehrt positioniert sein.

Durch einen Stromfluss in der Spule 13 wird ein Magnetfeld erzeugt, das mit dem durch die Permanentmagneten erzeugten Magnetfeld in Wechselwirkung tritt. Je nach Ausrichtung des Magnetfeldes werden dadurch die beiden Komponenten 10a und 10b aufeinander zu oder voneinander weg bewegt. Es wird eine Kraftwirkung auf den Tisch 2 erzeugt. Ergänzend zu dem Aktor 10 oder anstelle des Aktors 10 kann auch ein Sensor mit vergleichbaren Eigenschaften vorgesehen sein. Hierbei wird eine in der Spule 13 induzierte Spannung ausgelesen.

Die pneumatischen Isolatoren 3 sind, insbesondere jeweils, mit einem, vorzugsweise elektronisch, steuerbaren Ventil ausgestattet. Ein pneumatischer Isolator 3 bildet zusammen mit dem Ventil einen Aktor mit vertikaler Wirkrichtung.

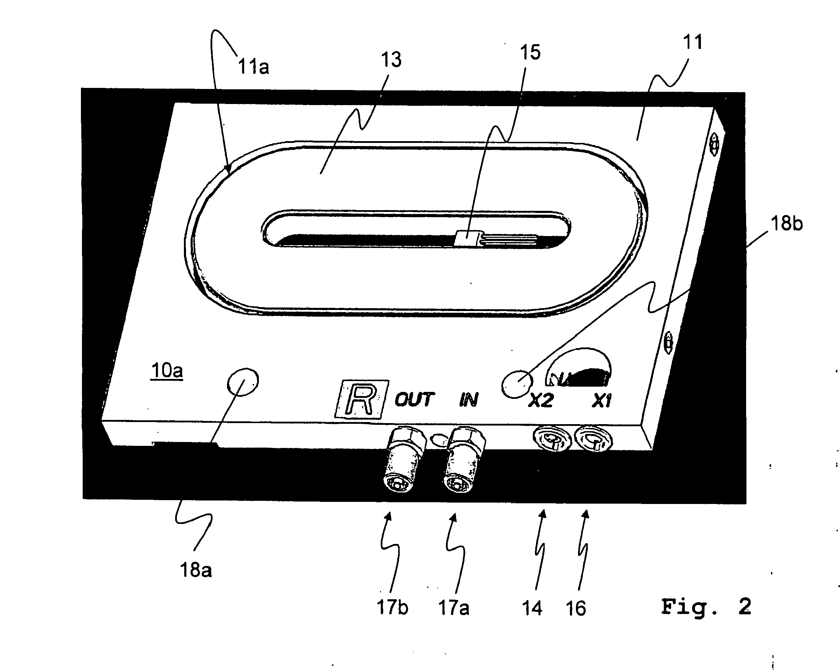

In Figur 2 ist der Aufbau eines Tauchspulenkörpers 10a oder eines Gehäuses 10a zur Aufnahme einer Spule 13 dargestellt. Der Tauchspulenkörpers 10a ist einem geöffneten Zustand bzw. ohne Abdeckung dargestellt. Der hier dargestellte Tauchspulenkörpers 10a kann auch nur einen Basiskörper 11 darstellen bzw. bereitstellen. Der Tauchspulenkörper 10a weist ein Gehäuse 11 auf. In dem Gehäuse 11 ist ein Aufnahmebereich 11a für die Spule 13 positioniert. Der Aufnahmebereich 11a ist als Aussparung 11a ausgebildet, die vorzugsweise mittels Ätzen in das Gehäuse 11 eingebracht ist. Im Inneren der Spule 13 ist ein Temperatursensor 15 vorgesehen. Die Spule 13 und der Temperatursensor 15 sind, insbesondere mittels eines Kunststoffs, welcher in Figur 2 nicht gezeigt ist, in oder mit dem Gehäuse 11 vergossen. Weiterhin sind mit IN/OUT die Anschlüsse 17a und 17b für die Wasserkühlung und die vorzugsweise elektrischen Anschlüsse 14 (X2) und 16 (X1) für den Temperatursensor 15 und für die Spule 13 und/oder die Spulenansteuerung dargestellt. Das Gehäuse 11, insbesondere das Basisteil 11 und das Gegenstück 12, ist vorzugsweise aus Edelstahl aufgebaut oder umfasst Edelstahl, beispielsweise vom Typ 14401 und/oder vom Typ 14404.

Erfindungsgemäß ist der Tauchspulenkörper 10a aus mehreren, Teilen aufgebaut. Vorzugsweise ist der Tauchspulenkörper 10a aus zwei Teilen aufgebaut, einem Basiskörper 11 und einem Gegenstück 12 zum Aufsetzen auf und/oder Verbinden mit dem Basiskörper 11. In Figur 2 ist bzw. wäre dabei nur das Basisteil 11 gezeigt. Das Gegenstück 11 oder ein Deckel 11 zum Abdecken des Basisteils 11 ist in der Figur 2 nicht gezeigt. Zudem sind die Kanäle 11b für die Wasserkühlung in der Figur 2 nicht dargestellt. Diese können beispielsweise als eine Schleife, die sich zumindest einmal um die Aussparung 11a herum erstreckt, und/oder auch mäanderförmig in dem Basiskörper 11 und vorzugsweise auch im Gegenstück 12 ausgebildet sein.

Das Gegenstück 12 ist vorzugsweise aus dem gleichen Material wie das Basisteil 11 gefertigt. Zudem werden die Strukturen, insbesondere die Aussparungen 12a und 12b, ebenso geätzt. In einer Ausgestaltung sind die geätzen Strukturen im Gegenstück 12, beispielsweise die Kanäle 12b zur Wasserkühlung und die Aussparung 12a zur Aufnahme der Spule 13, im Wesentlichen gleich ausgeführt wie die geätzten Strukturen im Basisteil 11. Die Kanäle zur Wasserkühlung und der Aufnahmebereich werden nach dem Zusammenfügen von Basisteil 11 und Gegenstück 12 sowohl durch die geätzen Strukturen in dem Basisteil 11 als auch durch die geätzten Strukturen in dem Gegenstück 12 gebildet. Nach Einführen der Spule 13 werden die beiden Teile 11 und 12 dann mittels Einbringen eines Lots 19 in einem Lötofen zu einer Einheit verlötet. Basisteil 11 und Gegenstück 12 werden vorzugsweise mittels einer Lötfolie 19 miteinander verbunden. Die Lötfolie 19 weist im Wesentlichen die gleichen Strukturen auf wie das Basisteil 11 und/oder das Gegenstück 12. Es hat sich gezeigt, dass das Zusammenführen von zwei Teilen Edelstahl mittels der Löttechnik eine sehr effektive Methode zur Erzeugung von Tauchspulenkörpern 10a darstellt. Das Material der Lötfolie basiert vorzugsweise auf einem Material, welches unter der Bezeichnung BNi-5 erhältlich ist (gemäß DIN 8513:1986 AWS/AMS). BNi-5 hat im Wesentlichen die folgende Zusammensetzung an Elementen: Chrom mit etwa 19 Gew.%, Silizium mit etwa 10 Gew.% und Nickel bildet den restlichen Bestandteil. Zusätzliche Elemente und/oder Verunreinigungen liegen in der Summe im Allgemeinen unter 0,3 bis 0,5 Gew.%.

Als Resultat daraus ergibt sich als Lötlegierung an den Grenzflächen der Edelstahlteile eine deutlich geringere Magnetisierung. So können Tauchspulensysteme 10a mittels Lötfolie aus BNi-5 mit einer 0.2 N/mm Restmagnetisierung gefertigt werden, ohne dass zusätzliche Maßnahmen zur Entmagnetisierung der Spulenkörper 10a oder 11 ergriffen werden müssen. Dies spart in der Fertigung der Spulenkörper 10a deutlich Zeit und Kosten. Werden die Kühlleitungen 11b und 12b und die Aussparungen 11a und 12a geätzt, so kann erfindungsgemäß zusätzlich eine Magnetisierung durch Fräsung effektiv verhindert oder reduziert werden.

Prinzipiell kann jeder Tauchspulenkörper 10a in ähnlicher Weise ausgeführt sein. Die Geometrie und die Abmessungen kann bzw. können je nach Anwendung variieren. Hier ist der Körper rechteckig ausgeführt. Typische Abmessungen liegen in einer Größenordnung von Höhe x Breite x Tiefe von 20 mm bis 300 mm x 10 mm bis 100 mm x 3 mm bis 30 mm, vorzugsweise 55 mm x 75 mm x 8mm oder auch 127 mm x 45 mm x 8 mm. Im Allgemeinen sind noch Anschlüsse oder Löcher 18a und 18b vorgesehen zur Befestigung des Tauchspulenkörpers 10a an einem Rahmen 20. Der Tauchspulenkörper 10a stellt eine Art Mittel zum Befestigen dar.

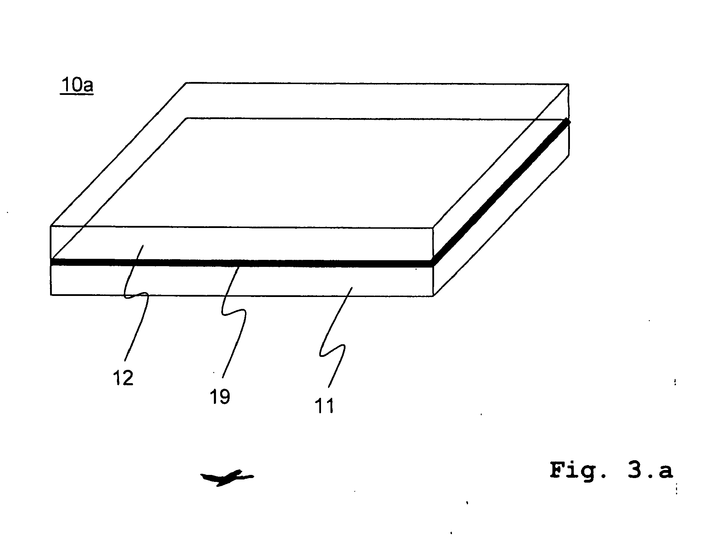

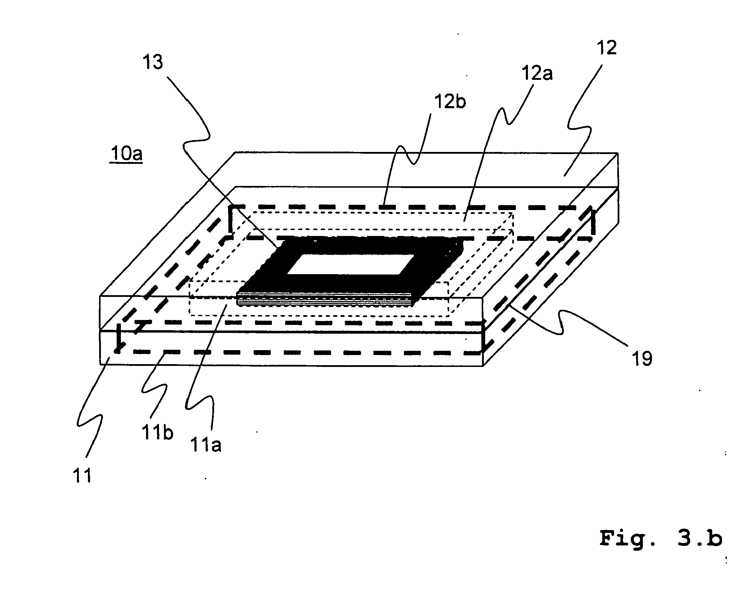

Abschließend zeigen die Figuren 3.a und 3.b schematisch den Tauchspulenkörper 10a aus Basisteil 11 und Gegenstück 12 in einem zusammengefügten Zustand. Die Komponenten 14 bis 18b sind jeweils nicht dargestellt. Zunächst zeigt Figur 1 den Tauchspulenkörper 10a in einer Außenansicht. Dieser wird durch das Basisteil 11 und das Gegenstück 12 gebildet. Das Basisteil 11 aus Figur 2 ist über ein Lot 19 oder eine Lotschicht 19 mit dem Gegenstück 12 verbunden. Das Gegenstück 12 ist im Wesentlichen entsprechend dem Basisteil 11 ausgebildet. Die Gestalt der Spule 13 ist hier beispielhaft echteckige gewählt.

Figur 3.b zeigt den Tauchspulenkörper 10a aus Figur 3.a in einer Art Innenansicht, in der die inneren Strukturen und Bestandteile des Tauchspulenkörpers 10a mit gestrichelten Linien schematisch dargestellt sind. Das Gegenstück 12 ist im Wesentlichen entsprechend dem Basisteil 11 ausgebildet. Das Basisteil 11 und das Gegenstück 12 besitzen im Wesentlichen die gleichen Strukturen. Vorzugsweise fluchten diese nach dem Zusammenfügen des Basisteils 11 mit dem Gegenstück 12. Sowohl das Basisteil 11 als auch das Gegenstück 12 weisen jeweils eine erste Aussparung 11a und 12a zur Aufnahme der Spule 13 auf. Die gesamte Aussparung zur Aufnahme der Spule 13 wird somit durch die erste Aussparung 11a in dem Basiskörper 11 und die erste

Aussparung 12a in dem Gegenstück 12 gebildet. Zudem ist noch der Kanal zur Fluidkühlung, vorzugsweise zur Wasserkühlung, in dem Tauchspulenkörper 10a angedeutet. Sowohl das Basisteil 11 als auch das Gegenstück 12 weisen jeweils eine zweite Aussparung 11b und 12b auf, welche nach dem Zusammenfügen gemeinsam den Kanal zur Fluidkühlung bilden. Die Lotschicht 19 verbindet die beiden Körper 11 und 12 stoffschlüssig. Die zweiten Aussparungen 11b und 12b und/oder die ersten Aussparungen 11a und 12a sind im Wesentlichen flüssigkeits- und/oder gasdicht verschlossen.

Es ist dem Fachmann ersichtlich, dass die beschriebenen Ausführungsformen beispielhaft zu verstehen sind. Die Erfindung ist nicht auf diese beschränkt sondern kann in vielfältiger Weise variiert werden, ohne den Geist der Erfindung zu verlassen. Merkmale einzelner Ausführungsformen und die im allgemeinen Teil der Beschreibung genannten Merkmale können jeweils untereinander als auch miteinander kombiniert werden.

### Bezugszeichenliste

- 1: Beweglicher oder fahrbarer Tisch oder Stage
- 2: Isolierte Masse oder Basismasse oder isolierter Tisch
- 3: Pneumatischer Isolator oder Schwingungsisolator oder Luftlager
- 4: Boden oder Unterlage
- 5: Positionssensor
- 6: Geschwindigkeitssensor oder Beschleunigungssensor in vertikaler Richtung
- 7: Geschwindigkeitssensor oder Beschleunigungssensor in horizontaler Richtung
- 8: Geschwindigkeitssensor oder Beschleunigungssensor in horizontaler Richtung
- 9: Positionssensor
- 10: Aktor oder Kraftaktor mit vertikaler Wirkrichtung
- 10a: Tauchspulenkörper mit eingebrachter Spule
- 10b: Körper mit Permanentmagnet
- 11: Gehäuse oder erstes Gehäuseteil oder Basisteil
- 11a: Aufnahmebereich oder erste Aussparung zur Aufnahme der Spule im Basisteil
- 11b: Kanal oder zweite Aussparung zur Fluid-, vorzugsweise Wasserkühlung, im Basisteil
- 12: Gehäuse oder zweites Gehäuseteil oder Gegenstück
- 12a: Aufnahmebereich oder erste Aussparung zur Aufnahme der Spule im Gegenstück
- 12b: Kanal oder zweite Aussparung zur Fluid-, vorzugsweise Wasserkühlung, im Gegenstück
- 13: Spule
- 14: Elektrischer Anschluss zum Ansteuern der Spule (X2)
- 15: Temperatursensor
- 16: Elektrischer Anschluss für den Temperatursensor (X1)
- 17a: Erster Anschluss für eine Fluid-, vorzugsweise Wasserkühlung (IN)
- 17b: Zweiter Anschluss für eine Fluid-, vorzugsweise Wasserkühlung (OUT)
- 18a: Erster Anschluss zur Befestigung an einem Rahmen
- 18a: Zweiter Anschluss zur Befestigung an einem Rahmen
- 19: Lot oder Lotschicht oder Verbindungsschicht
- 20: Rahmen oder Halterung am Schwingungsisolationssystem
- 100: Schwingungsisolationssystem

## Patentansprüche

1. Gehäuse (10a) zur Aufnahme wenigstens eines Sensors mit einer Spule zur Erfassung von Schwingungen und/oder zur Aufnahme wenigstens eines Aktors (10) mit einer Spule (13) zur Kompensation von Schwingungen umfassend
- ein Basisteil (11) mit einem Bereich (11a) zur Aufnahme der Spule des Sensors und/oder zur Aufnahme der Spule (13) des Aktors (10) und/oder mit einem Kanal (11b) zur Fluidkühlung des Gehäuses (10a),
- ein Gegenstück (12), das mit dem Basisteil (11) derart verbunden ist, dass zumindest der Aufnahmebereich (11a) und/oder der Kanal (11b) und die in dem Aufnahmebereich (11a) positionierte Spule (13) abgedeckt sind, wobei
der Aufnahmebereich (11a) als eine erste Aussparung (11a) in dem Basiskörper (11) ausgeführt ist und/oder der. Kanal (11b) als eine zweite Aussparung (11b) in dem Basiskörper (11) ausgeführt ist, die über ein Material auflösendes und/oder ein Material verdampfendes Verfahren in dem Basiskörper (11) eingebracht ist bzw. sind und/oder wobei
das Basisteil (11) und das Gegenstück (12) mittels eines Lots (19) verbunden sind, welches ein auf Nickel basiertes Lot ist und einen Anteil an Chrom von größer als 10 Gew.% aufweist.

2. Gehäuse (10a) nach vorstehendem Anspruch, **dadurch gekennzeichnet, dass** das Gegenstück (12) in seiner Geometrie und/oder seinen Abmessungen im Wesentlichen der Geometrie und/oder den Abmessungen des Basisteils (11) entspricht.

3. Gehäuse (10a) nach einem der vorstehenden Ansprüche; **dadurch gekennzeichnet, dass** der Aufnahmebereich als eine erste Aussparung (12a) in dem Gegenstück (12) ausgeführt ist und/oder der Kanal (12b) als eine zweite Aussparung (12b) in dem Gegenstück (12) ausgeführt ist, die über ein Material auflösendes und/oder ein Material verdampfendes Verfahren in das Gegenstück (12) eingebracht ist bzw. sind.

4. Gehäuse (10a) nach einem der vorstehenden Ansprüche, **dadurch gekennzeichnet, dass** das Material auflösende Verfahren ein Ätzverfahren umfasst und/oder das Material verdampfende Verfahren eine Laserablation umfasst.

5. Gehäuse (10a) nach einem der vorstehenden Ansprüche, **dadurch gekennzeichnet, dass** der Aufnahmebereich für die Spule (13) durch die erste Aussparung (11a) in dem Basiskörper (11) und die erste Aussparung (12a) in dem Gegenstück (12) und/oder der Kanal zur Fluidkühlung durch die zweite Aussparung (11b) in dem Basiskörper (11) und die zweite Aussparung (12b) in dem Gegenstück (12) gebildet ist bzw. sind.

6. Gehäuse (10a) nach einem der vorstehenden Ansprüche, **dadurch gekennzeichnet, dass** das Lot (19) im Wesentlichen frei von Eisen ist und/oder das Lot im Wesentlichen aus den Bestandteilen Nickel, Chrom und Silizium aufgebaut ist und/oder das Lot einen Anteil an Silizium von 5 Gew.% bis 15 Gew.% und/oder einen Anteil an Chrom von 15 Gew.% bis 25 Gew% und/oder einen Anteil an Nickel von größer als 60 Gew.% aufweist.

7. Gehäuse (10a) nach einem der vorstehenden Ansprüche, **dadurch gekennzeichnet, dass** das Lot (19) zum Verbinden als eine Lötfolie bereitgestellt ist und/oder die Lötfolie entsprechend dem Basisteil (11) und/oder dem Gegenstück (12) eine erste und/oder eine zweite Aussparung aufweist, welche vorzugsweise mittels Stanzen in die Lötfolie eingebracht ist bzw. sind.

8. Aktives Schwingungsisolationssystem (100) umfassend
a) eine Basismasse (2) zum Lagern einer zu isolierenden Last (1),
b) pneumatische Schwingungsisolatoren (3) mit regelbaren Ventilen zum Stützen der Basismasse (2) gegenüber einer Unterlage (4),
c) Positionssensoren (5) zum Liefern von vertikalen Positionssignalen der Basismasse (2),
d) ein Regelsystem zur Schwingungskompensation in zumindest einem Freiheitsgrad der Translation (Xt,Yt,Zt) und zumindest einem Freiheitsgrad der Rotation (Xr,Yr,Zr) mit wenigstens
d1) Sensoren (6,7,8,9) zum Liefern von Schwingungen repräsentierenden Sensorsignalen,
d2) Aktoren (10) zur Schwingungskompensation, die durch Zuführen von Aktor-Stellsignalen ansteuerbar sind, und
d3) einer Regeleinrichtung (12), welche zum Verarbeiten der gelieferten Sensorsignale in die Aktor-Stellsignale ausgebildet ist,
wobei wenigstens ein auf einer Tauchspulentechnik basierender Sensor aus den Sensoren (6,7,8,9) und/oder wenigstens ein auf einer Tauchspulentechnik basierender Aktor (10) aus den Aktoren (10) in einem Gehäuse (10a) gemäß einem der vorstehenden Ansprüche angeordnet ist bzw. sind.

9. Verfahren zur Herstellung eines Gehäuse (10a) zur Aufnahme wenigstens eines Sensors mit einer Spule zur Erfassung von Schwingungen und/oder zur Aufnahme wenigstens eines Aktors (10) mit einer Spule (13) zur Kompensation von Schwingungen
umfassend
- ein Basisteil (11) mit einem Bereich (11a) zur Aufnahme der Spule des Sensors und/oder zur Aufnahme der Spule (13) des Aktors (10) und/oder mit einem Kanal (11b) zur Fluidkühlung des Gehäuses (10a),
- ein Gegenstück (12), das mit dem Basisteil (11) derart verbunden wird, dass zumindest der Aufnahmebereich (11a) und/oder der Kanal (11b) und die in dem Aufnahmebereich (11a) positionierte Spule (13) abgedeckt werden, wobei
der Aufnahmebereich (11a) als eine erste Aussparung (11a) in dem Basiskörper (11) ausgeführt wird und/oder der Kanal (11b) als eine zweite Aussparung (11b) in dem Basiskörper (11) ausgeführt wird, die über ein Material auflösendes und/oder ein Material verdampfendes Verfahren in dem Basiskörper (11) eingebracht wird bzw. werden und/oder wobei
das Basisteil (11) und das Gegenstück (12) mittels Lots (19), das auf Nickel basiert und einen Chromanteil von größer als 10 Gew.% aufweist, verbunden werden.

10. Verwendung eines auf Nickel basierten Lots (19) mit einem Chromanteil von größer als 10 Gew.%, vorzugsweise vom Typ BNi-5, zum Aufbau eines Gehäuse (10a), welches zur Aufnahme wenigstens eines Sensors mit einer Spule zur Erfassung von Schwingungen und/oder zur-Aufnahme wenigstens eines Aktors (10) mit einer Spule (13) zur Kompensation von Schwingungen ausgebildet ist.
